# EUROPEAN PATENT SPECIFICATION

(11) **EP 2 909 098 B1**
(45) Date of publication and mention of the grant of the patent: **19.07.2017**
(21) Application number: 13847194.1
(22) Date of filing: 10.10.2013
(51) Int. Cl.: B65D 53/04, B29C 65/02, B32B 37/30, B65D 43/02, B32B 37/16, B65D 3/12, B65D 77/20, B29L 9/00, B32B 7/04, B32B 15/08, B32B 15/20

(54) **FLEXIBLE LID**
FLEXIBLER DECKEL
COUVERCLE SOUPLE

(30) Priority: 19.10.2012 SE 1251190
(43) Date of publication of application: 26.08.2015
(73) Proprietor: Å&R Carton Lund AB, 221 00 Lund (SE)
(72) Inventor: DAHLSTRÖM, Tommy, S-246 52 Löddeköpinge (SE)
(74) Representative: Zacco Sweden AB
(86) International application number: PCT/SE2013/051193
(87) International publication number: WO 2014/062119

(56) References cited:
- EP-A2- 1 559 658
- WO-A1-01/44073
- DE-U- 1 747 781
- GB-A- 1 066 497
- US-A- 4 968 624
- US-A1- 2007 007 229

## Description

### TECHNICAL FIELD

The invention relates to a flexible lid for sealed closing of an opening in a container.

### PRIOR ART

Containers for foodstuffs in powder form are preferably sealed with a flexible inner lid which is welded by for example inductive heating around an opening in the container. Such lids often consist of one or more layers of a laminate structure including an aluminum foil and a layer of a weldable plastic. When several laminate constructions are used, e.g. to increase the total thickness of the aluminum or to achieve tear tracks for opening, the laminate structures must be joined together in an appropriate way.

Normally a joining weld path is added along the outer edge of the lid and in many applications this is sufficient. In some applications, however, it appears that an outer weld path is not sufficient to hold the laminate constructions together in a satisfactory manner.

GB1066497 discloses a flexible lid for closing an opening in a container wherein the lid is a multilayer structure comprising first and second layers, wherein the first layer is a laminate structure comprising a layer of aluminum and a layer of a heat-sealable adhesive. The first and second layers are welded to one another across a solid circular welding area located in the centre of the lid.

### DISCLOSURE OF INVENTION

The object of this invention is to provide a flexible lid in which the above-mentioned joining problem is solved. This object is achieved with a lid according to claim 1. The dependent claims represent advantageous embodiments, developments and variants of the invention.

The invention relates to a flexible lid for sealed closing of an opening in a container, the lid is a multilayer structure comprising a first and a second main layer, wherein at least the first main layer is a laminate structure comprising a layer of aluminum and an outer layer of a weldable plastic, wherein the outer weldable layer faces the second main layer.

The invention is characterized in that the first and the second main layer are welded to one another across a welding area, wherein the welding area comprises a first part located in the center of the lid where the welding is arranged in a circular path, wherein the circular weld path has at least one interruption which allows communication between the a volume inside the circular weld path and a volume outside the circular weld path.

A sufficiently large contiguous surface is needed in order for the mid weld to be strong enough. A central weld area can therefore not be too small. At the same time it has been found that the heat influence cannot be allowed to be so strong that a homogeneous central area may be heated to welding temperature. The ring shape allows a large enough area can be allowed to warm to welding temperature without the heat load becoming too great, and that the lid is subjected to a uniform heat exposure without edge effects.

Furthermore, the interruption in the ring weld path brings about that any possible air confined inside the ring-shaped weld may pass and spread outside the ring shape. It has i.e. been shown that confined air otherwise can form a small pillow inside the circular weld path. On a single lid this effect may be difficult to notice but when thousands of lids are stacked or are placed in trays this may cause instability and heterogeneity which in turn can disrupt the production. With said interruption in the weld path no pillows are normally formed at all and if such tendencies still exist the lids can be flattened. Interruptions in the weld can be achieved by making recesses in a circular weld back.

In one embodiment of the invention the welding area comprises a second part extending one turn along the first and second outer edges of the main layer. A sufficient joining of the lid is thus obtained in most cases.

In one embodiment of the invention the first main layer is greater than the second so that the first layer forms an edge which projects beyond the second layer. Thereby the projecting edge can e.g. be folded up and welded against the container's interior side.

In one embodiment of the invention also the second major layer is a laminate construction comprising a layer of aluminum and an outer layer of a weldable plastic, wherein the outer weldable layers of the two outer main layers face each other.

In one embodiment of the invention the outer edges of the first and second main layer have a non-circular shape. The edge effects that could occur if the circular central weld was shaped like the outer contour are thus avoided.

In one embodiment of the invention the circular weld path has two interruptions of the type mentioned, wherein the two interruptions are placed opposite each other. This provides improved passage of air.

The invention also relates to a container comprising a flexible lid of the type described above.

### DESCRIPTION OF THE FIGURES

The invention will now be described in more detail with reference to the following figures in which:

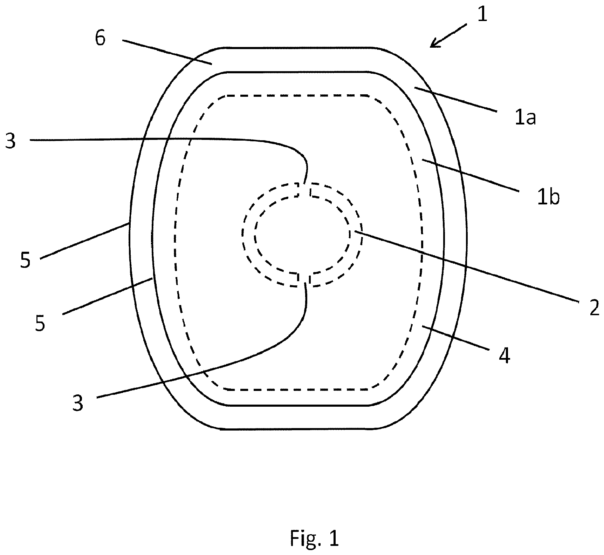

Figure 1 shows a schematic view of a preferred embodiment of an inventive lid.

### PREFERRED EMBODIMENT

Figure 1 shows a flexible lid 1 for sealing and closing of an opening in a container (not shown). The lid 1 is a multilayer structure comprising a first and a second main layer 1a, 1b which constitute the top and bottom of the lid 1 and are welded into one unit. Each of the principal layers 1a, 1b is a laminate structure consisting of a layer of aluminum and a layer of a weldable plastic, the weldable layers of the two main layers face each other.

Main layers 1a, 1b are welded to each other across a welding area , wherein the weld region comprises a first area 2 located in the center of the lid 1 where the welding is arranged in a circular path , wherein the circular weld path has two interruption 3 located opposite one another which allows communication between the a volume inside the circular welding line 2 and a volume outside the circular weld path. Welding area includes a second compartment 4 extending one turn along the first and second main layer 1a and 1b, the outer edges of the fifth

The first main layer 1a is larger than the other main layer 1b so that the first layer forms an edge 6 which protrudes beyond the second layer. This edge 6 is suitable to be folded up and welded to the inner wall around an opening in a container such as to thereby seal the container. Suitably, the first main layer 1a forms the upper side of the lid 1.

As seen, the first and the second main layer 1a and 1b, the outer edges 5, and thus the lid 1 has a non-circular shape.

The interruptions 3 preferably constitute less than 20%, preferably less than 10%, of the circular circumference of the weld.

The invention is not limited to the above described embodiment but can be varied within what is defined by the following claims. For example, the main layers may have more or fewer layers included in the laminate structure. Further, the number of interruptions may be one or more than two.

The lid 1 is preferably provided with tear tracks or pull-tab to facilitate removal of the lid from a container.

## Claims

1. Flexible lid for sealed closing of an opening in a container, wherein the lid is a multilayer structure comprising a first and a second main layer, wherein at least the first main layer is a laminate structure comprising a layer of aluminum and an outer layer of a weldable plastic, wherein the outer weldable layer faces the second main layer,
**characterized in**
**that** the first and the second main layer are welded to one another across a welding area, wherein the welding area comprises a first part located in the center of the lid where the welding is arranged in a circular path, wherein the circular weld path has at least one interruption which allows communication between a volume inside the circular weld path and a volume outside the circular weld path.

2. Flexible lid of claim 1,
**characterized in**
**that** the welding area comprises a second part extending one lap along the outer edges of the first and second main layer.

3. Flexible lid of claim 2,
**characterized in**
**that** the first main layer is greater than the second such that the first layer forms an edge that protrudes beyond the other layer.

4. Flexible lid according to any of the above claims,
**characterized in**
**that** also the second main layer is a laminate structure comprising a layer of aluminum as well as an outer layer of a weldable plastic, wherein the outer weldable layers of the two main layers face each other.

5. Flexible lid according to any of the above claims,
**characterized in**
**that** the outer edges of the first and second main layers have a non-circular shape.

6. Flexible lid according to any of the above claims,
**characterized in**
**that** the circular weld path has two interruptions of the type mentioned, wherein the two interruptions are placed opposite each other.

7. Container comprising a flexible lid according to any of the above claims.

## Patentansprüche

1. Flexibler Deckel zum dichtenden Schließen einer Öffnung in einem Behälter, wobei der Deckel eine mehrschichtige Struktur umfassend eine erste und eine zweite Hauptschicht ist, wobei mindestens die erste Hauptschicht eine Laminatstruktur ist umfassend eine Aluminiumschicht und eine Außenschicht aus einem schweißbaren Kunststoff, wobei die äußere schweißbare Schicht der zweiten Hauptschicht zugewandt ist,
**dadurch gekennzeichnet,**
**dass** die erste und zweite Hauptschicht über einen Schweißbereich miteinander verschweißt sind, wobei der Schweißbereich einen ersten Teil umfasst, der mittig im Deckel angeordnet ist, wobei die Schweißung in einer kreisförmigen Bahn angeordnet ist, wobei die kreisförmige Schweißbahn mindestens eine Unterbrechung aufweist, die Kommunikation zwischen einem Volumen innerhalb der kreisförmigen Schweißbahn und einem Volumen außerhalb der kreisförmigen Schweißbahn ermöglicht.

2. Flexibler Deckel nach Anspruch 1,
**dadurch gekennzeichnet,**
**dass** der Schweißbereich einen zweiten Teil umfasst, der sich eine Runde entlang den Außenkanten der ersten und zweiten Hauptschicht erstreckt.

3. Flexibler Deckel nach Anspruch 2,
**dadurch gekennzeichnet,**
**dass** die erste Hauptschicht größer als die zweite ist, so dass die erste Schicht eine Kante bildet, die über die andere Schicht hervorsteht.

4. Flexibler Deckel nach einem der vorgehenden Ansprüche,
**dadurch gekennzeichnet,**
**dass** auch die zweite Hauptschicht eine Laminatstruktur ist umfassend eine Aluminiumschicht und eine Außenschicht aus einem schweißbaren Kunststoff, wobei die äußeren schweißbaren Schichten der zwei Hauptschichten einander zugewandt sind.

5. Flexibler Deckel nach einem der vorgehenden Ansprüche,
**dadurch gekennzeichnet,**
**dass** die Außenkanten der ersten und zweiten Hauptschicht eine nichtkreisförmige Form aufweisen.

6. Flexibler Deckel nach einem der vorgehenden Ansprüche,
**dadurch gekennzeichnet,**
**dass** die kreisförmige Schweißbahn zwei Unterbrechungen der erwähnten Art aufweist, wobei die zwei Unterbrechungen einander gegenüberliegend angeordnet sind.

7. Behälter umfassend einen flexiblen Deckel nach einem der vorgehenden Ansprüche.

## Revendications

1. Couvercle flexible pour la fermeture scellée d'une ouverture dans un récipient, ledit couvercle étant une structure multicouche comprenant une première et une deuxième couche principale, au moins ladite première couche principale étant une structure stratifiée comprenant une couche d'aluminium et une couche extérieure d'un plastique soudable, ladite couche extérieure soudable faisant face à la deuxième couche principale,
**caractérisé en**
**ce que** la première et la deuxième couche principale sont soudées l'une à l'autre à travers une zone de soudage, ladite zone de soudage comprenant une première partie située au centre du couvercle où le soudage est disposé dans un trajet circulaire, ledit trajet de soudure circulaire présentant au moins une interruption qui permet la communication entre un volume à l'intérieur du trajet de soudure circulaire et un volume à l'extérieur du trajet de soudure circulaire.

2. Couvercle flexible selon la revendication 1,
**caractérisé en**
**ce que** la zone de soudage comprend une deuxième partie s'étendant une étape le long des bords extérieurs des première et deuxième couches principales.

3. Couvercle flexible selon la revendication 2,
**caractérisé en**
**ce que** la première couche principale est supérieure à la deuxième, si bien que la première couche forme un bord qui fait saillie au-delà de l'autre couche.

4. Couvercle flexible selon l'une quelconque des revendications précédentes,
**caractérisé en**
**ce qu'**également la deuxième couche principale est une structure stratifiée comprenant une couche d'aluminium ainsi qu'une couche extérieure d'un plastique soudable, dans lequel les couches soudables extérieures des deux couches principales font face l'une à l'autre.

5. Couvercle flexible selon l'une quelconque des revendications précédentes,
**caractérisé en**
**ce que** les bords extérieurs des première et deuxième couches principales ont une forme non circulaire.

6. Couvercle flexible selon l'une quelconque des revendications précédentes,
**caractérisé en**
**ce que** le trajet de soudure circulaire comporte deux interruptions du type mentionné, les deux interruptions étant placées l'une en face de l'autre.

7. Récipient comprenant un couvercle flexible selon l'une quelconque des revendications précédentes.
